(19) Europäisches Patentamt
European Patent Office
Office européen des brevets

(11) **EP 3 764 943 B1**

(12) **EUROPÄISCHE PATENTSCHRIFT**

(45) Veröffentlichungstag und Bekanntmachung des Hinweises auf die Patenterteilung:
**27.04.2022 Patentblatt 2022/17**

(21) Anmeldenummer: **19712682.4**

(22) Anmeldetag: **04.03.2019**

(51) Internationale Patentklassifikation (IPC):
***A61C 15/02*** *(2006.01)*

(52) Gemeinsame Patentklassifikation (CPC):
**A61C 15/02**

(86) Internationale Anmeldenummer:
**PCT/EP2019/000062**

(87) Internationale Veröffentlichungsnummer:
**WO 2019/174782 (19.09.2019 Gazette 2019/38)**

(54) **INTERDENTALREINIGER**

INTERDENTAL CLEANER

DISPOSITIF DE NETTOYAGE DE L'ESPACE INTERDENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2018 DE 102018002147**

(43) Veröffentlichungstag der Anmeldung:
**20.01.2021 Patentblatt 2021/03**

(73) Patentinhaber: **Sunstar Suisse S.A.**
**1163 Etoy (CH)**

(72) Erfinder: **BUTZ, Jürgen**
**79677 Schönau (DE)**

(74) Vertreter: **Lichti - Patentanwälte Partnerschaft mbB**
**Postfach 41 07 60**
**76207 Karlsruhe (DE)**

(56) Entgegenhaltungen:
**EP-A1- 0 932 371        EP-A1- 3 245 977**
**WO-A1-2017/104784      DE-A1-102012 015 664**
**DE-A1-102013 010 782   DE-A1-102016 005 012**

EP 3 764 943 B1

**Beschreibung**

Die Erfindung betrifft einen Interdentalreiniger mit einem stabförmigen Träger aus einem Kunststoff-Material, der sich entlang einer Längsachse erstreckt, wobei der stabförmige Träger in seinem vorderen Endabschnitt ein Reinigungsteil in Form eines Überzugs aus einem weich-elastischen Kunststoff-Material aufweist, wobei in einem hinteren Endabschnitt des Trägers, das dem vorderen Endabschnitt axial entgegengesetzt ist, ein Griffteil angeordnet ist.

Ein derartiger Interdentalreiniger, der auch als Zahnstocher bezeichnet wird, ist beispielsweise aus der EP 0 932 371 B1 bekannt. Der dort gezeigte Interdentalreiniger besitzt einen stabförmigen Träger aus einem formstabilen Kunststoff, an dessen hinteren Ende über einen Verbindungsbereich ein Handgriffteil einstückig angeformt ist. In seinem vorderen, dem Handgriffteil abgewandten Endbereich ist der Träger mit einem weich-elastischen Überzug versehen, der mit radial hervorstehenden Strukturelementen ausgebildet sein kann und ein Reinigungsteil bildet. Zur Reinigung der Zahnzwischenräume erfasst der Nutzer den Interdentalreiniger an dem Handgriffteil und führt das vordere Ende des Trägers und somit das Reinigungsteil in den Zahnzwischenraum ein und bewegt den Interdentalreiniger hin und her.

Gleichartige Interdentalreiniger sind auch aus der DE 10 2012 015 664 A1, der DE 10 2013 010 782 A1, der DE 10 2016 005 012 A1, der EP 3 245 977 A1 und der WO 2017/104784 A1 bekannt.

Es hat sich gezeigt, dass die Reinigungswirkung wesentlich von der Art und Weise abhängt, wie der Nutzer den Interdentalreiniger innerhalb des Zahnzwischenraumes führt. Dabei ist die Ausrichtung des Interdentalreinigers im wesentlichen dadurch bestimmt, wie der Benutzer das Handgriffteil relativ zu dem zu reinigenden Zahnzwischenraum anordnet. Zwar besitzt der Träger eine gewisse Elastizität und kann elastisch verformt werden, falls eine besondere Schrägstellung des Reinigungsabschnittes innerhalb des Zahnzwischenraums notwendig ist, lässt sich diese jedoch nur erreichen, indem der Benutzer den gesamten Interdentalreiniger entsprechend schräg ausrichtet, was in manchen Fällen schwierig zu erreichen ist.

Der Erfindung liegt die Aufgabe zugrunde, einen Interdentalreiniger der genannten Art zu schaffen, der eine variablere Positionierung des Reinigungsteils innerhalb des Zahnzwischenraums ermöglicht.

Die Aufgabe wird gelöst mit einem Interdentalreiniger mit den Merkmalen des Anspruchs 1. Dieser sieht einen stabförmigen Träger aus einem Kunststoff-Material vor, der sich entlang einer Längsachse erstreckt, wobei der stabförmige Träger in seinem vorderen Endabschnitt ein Reinigungsteil in Form eines Überzugs aus einem weich-elastischen Kunststoff-Material aufweist, wobei in einem hinteren Endabschnitt des Trägers, das dem vorderen Endabschnitt axial entgegengesetzt ist, ein Griffteil angeordnet ist, wobei der Träger außerhalb des Reinigungsteils einen Verformungsabschnitt aufweist, der unter den folgenden Bedingungen eine signifikant größere Verformung zeigt:

- wenn der Interdentalreiniger in einem Abstand von 10 mm von seinem hinteren axialen Ende im Bereich des Griffteils senkrecht zur Längsachse des Trägers mittels eines Spannmittels in einer Einspannebene fest eingespannt ist, und

- wenn ein eine Kragabschnittslänge aufweisender Kragabschnitt des Interdentalreinigers von der Einspannebene bis zum Reinigungsteil in zumindest acht Abschnitte gleicher axialer Länge unterteilt wird, wobei jeder Abschnitt einen dem Griffteil zugewandten Anfangspunkt und einen dem Reinigungsteil zugewandten Endpunkt aufweist und

- wenn eine äußere Kraft auf den Interdentalreiniger in einem Abstand von 7 mm von seinem vorderen axialen Ende derart einwirkt, dass der Interdentalreiniger im Lastwirkungspunkt $P_F$ elastisch um eine Strecke von 8 mm senkrecht zur Längsachse des Trägers ausgelenkt ist, und

- wenn am verformten Interdentalreiniger für jeden Anfangs- und Endpunkt der Abschnitte die x-Koordinate entlang der Längsachse des Interdentalreinigers und die y-Koordinate in Wirkungsrichtung der äußeren Kraft bestimmt wird, und

- wenn für jeden Abschnitt aus den x- und y-Koordinaten seines Anfangspunktes und seines Endpunktes eine Abschnittsgerade berechnet wird, die durch den Anfangspunkt und durch den Endpunkt des jeweiligen Abschnitts verläuft, und

- wenn die jeweils kleineren Schnittwinkel in Grad zwischen benachbarten Abschnittsgeraden berechnet werden, dann sind die Schnittwinkel von zwei oder drei Abschnittsgeraden um zumindest 50% größer als der größte Schnittwinkel aller übrigen Abschnittsgeraden.

Um das Biegeverhalten des erfindungsgemäßen Interdentalreinigers kontrolliert und reproduzierbar bestimmen zu können, setzt die Erfindung den oben beschriebenen Aufbau notwendig voraus. Damit können das Biegeverhalten und die Verformungen des Interdentalreinigers, wie sie auch beim Reinigen der Zahnzwischenräume auftreten, simuliert werden.

Die Erfindung geht von der Grundüberlegung aus, dass sich bei den bekannten Interdentalreinigern aus dem Stand der Technik im Anwendungsfall die Verformungen auf die gesamte axiale Länge des Trägers verteilen und dadurch die nachteiligen Krümmung des Interdentalreinigers und die daraus resultierenden Materialbeanspruchungen verursachen. Durch eine gezielte Veränderung der Steifigkeit im Verformungsabschnitt des Trägers erfolgt fast die gesamte (elastische) Verformung des Interdentalreinigers im Bereich des Verformungsabschnitts. Der übrige Bereich des Trägers ist dadurch wesentlich geringeren Belastungen ausgesetzt. An der Position des Verformungsabschnitts mit geringerer Steifigkeit können gezielt Vorkehrungen getroffen werden, um die auftretenden Belastungen sicher aufzunehmen.

Das Spannmittel zum Einspannen des Interdentalreinigers kann zwei einander gegenüber angeordnete Wangen aufweisen, die sich beim Einspannen aufeinander zu bewegen und dabei den Interdentalreiniger zwischen sich und senkrecht zu seiner Längsachse fest einspannen. Die Einspannebene steht somit senkrecht zur Längsachse des Trägers. Vorzugsweise ist das Spannmittel derart ausgebildet, den Interdentalreiniger in jede Richtung senkrecht zu seiner Längsachse fest einzuspannen.

Der Kragabschnitt des Interdentalreinigers im Sinne der Erfindung ist definiert als jener Bereich des Interdentalreinigers, der sich von der Einspannebene bis zum Beginn des Reinigungsteils erstreckt. Das Reinigungsteil ist damit nicht Teil des Kragabschnitts.

Die Unterteilung des Kragabschnitts in Abschnitte ist vorzugsweise derart, dass der Endpunkt eines Abschnitts mit dem Anfangspunkt des nächsten, benachbarten Abschnitts zusammenfällt. In vorteilhaften Ausgestaltungen weisen die Abschnitte jeweils eine axiale Länge von höchstens 2 mm, insbesondere höchstens 1 mm auf, um Verformungen mit begrenzter axialer Ausdehnung örtlich besser auflösen zu können.

Vorzugsweise wirkt die äußere Kraft auf das Reinigungsteil, um das Verformungsverhalten des Interdentalreinigers bei seiner Anwendung zu simulieren. Die äußere Kraft wirkt insbesondere auf die axiale Mitte des Reinigungsteils ein.

Die Bestimmung der x- und y-Koordinaten der Anfangs- und der Endpunkte der Abschnitte kann beispielsweise mittels optischer Messmethoden, etwa mittels einer Kamera oder Messprojektor, erfolgen. Dabei fällt die x-Achse mit der Längsachse des Trägers zusammen und die y-Achse ist parallel zur Wirkungsrichtung der äußeren Kraft gerichtet. Die von der x- und y-Achse aufgespannte zweidimensionale Ebene steht somit senkrecht zur Einspannebene.

Die Bestimmung der Abschnittsgeraden eines Abschnitts mit dem Anfangspunkt $a_a(x_a/y_a)$ und mit dem Endpunkt $a_e(x_e/y_e)$ erfolgt anhand der Geradengleichung: Diese berechnet für zwei gegebene Punkte eine eindeutig definierte Gerade, die durch beide Punkte verläuft. Die Abschnittsgerade mit den Punkten $(x_{ag}/y_{ag})$ folgt dabei der Gleichung:

$$y_{ag} = ((y_e - y_a)/(x_e - x_a)) \ x_{ag} + (y_a x_e - y_e x_a)/(x_e - x_a)$$

Diese Gleichung kann auch in der üblichen Form

$$y_{ag} = m_{ag} \ x_{ag} + y_{0;ag}$$

geschrieben werden, wobei $m_{ag}$ die Steigung der Abschnittsgerade und $y_{0;ag}$ den y-Achsenabschnitt der Abschnittsgerade bezeichnen. $y_{ag}$ und $x_{ag}$ sind die y- und x-Koordinaten der Abschnittsgeraden.

Die Schnittwinkel werden erfindungsgemäß stets auf der Grundlage zweier benachbarter Abschnitte berechnet. Zwischen zwei benachbarten Abschnittsgeraden mit den Steigungen $m_{ag1}$ und $m_{ag2}$ bestimmt sich der Schnittwinkel $\alpha$ zu:

$$\alpha = \arctan(|(m_{ag1} - m_{ag2})/(1 + (m_{ag1} \cdot m_{ag2}))|).$$

Winkelangaben sind dabei stets in Grad (°) angegeben. Schnittwinkel im Sinne der Erfindung sind stets jene Schnittwinkel kleiner als 90° und werden auf der Basis benachbarter Abschnitte berechnet. Der kleinere und der größere Schnittwinkel ergeben in Summe stets 180°. Im Sinne der Erfindung ist der Schnittwinkel positiv, wenn der Schnittwinkel einer Krümmung der zugehörigen Abschnitte in Wirkrichtung der äußeren Kraft entspricht. Entsprechend ist der Schnittwinkel negativ, wenn eine Krümmung entgegen der Wirkrichtung der äußeren Kraft vorliegt. Bei einem Schnittwinkel gleich 0 liegt keine relative Krümmung der Abschnitte zueinander vor.

Vorzugsweise sind die Schnittwinkel von zwei oder drei Abschnittsgeraden um zumindest 80%, insbesondere zumindest 100% und vorzugsweise zumindest 200% größer als der größte Schnittwinkel aller übrigen Abschnittsgeraden.

In einer weiteren Ausgestaltung der Erfindung sind die Schnittwinkel von zwei oder drei aufeinander folgenden Abschnittsgeraden um zumindest 50% größer als der größte Schnittwinkel aller übrigen Abschnittsgeraden. Aufeinander folgende Abschnittsgeraden im Sinne der Erfindung sind zueinander benachbarte Abschnittsgeraden.

Der Träger kann einstückig mit dem Griffteil ausgestaltet sein, wodurch der Interdentalreiniger einfach herzustellen ist. Alternativ kann der Träger form- und/oder kraftschlüssig mit dem Griffteil verbunden sein, so dass das Material des Griffteils unabhängig vom Material des Trägers hinsichtlich der Handhabbarkeit auswählbar ist.

Vorzugsweise ist der Kragabschnitt des Interdentalreinigers von der Einspannebene bis zum Reinigungteil in zumindest zehn, insbesondere in zumindest fünfzehn oder zwanzig, höchst vorzugsweise in zumindest dreißig Abschnitte gleicher axialer Länge unterteilt.

Der Verformungsabschnitt innerhalb des Kragabschnitts kann die geringste Biegesteifigkeit des gesamten Trägers aufweisen, so dass gezielt an dieser Position die größten Verformungen des Interdentalreinigers während der Benutzung auftreten. Die Materialbelastungen des übrigen Interdentalreinigers werden dadurch reduziert, was die Lebensdauer des Interdentalreinigers erhöht.

Insbesondere wird die verringerte Biegesteifigkeit des Verformungsabschnitts durch eine Querschnittsschwächung und/oder durch eine zumindest anteilige Verwendung eines Materials mit reduzierter Biegesteifigkeit und/oder durch die Geometrie des Verformungsabschnitts erreicht.

In einer Ausgestaltung der Erfindung ist das Griffteil zumindest abschnittsweise plattenförmig ausgebildet, wobei die Lastwirkungsrichtung der äußeren Kraft normal zur Plattenebene des Griffteils gerichtet ist. Das Griffteil ist in dieser Ausgestaltung leichter greif- und handhabbar. In der Anwendung des Interdentalreinigers ist davon auszugehen, dass die äußeren Kräfte hauptsächlich normal zur Plattenebene des Reinigungsteils gerichtet sind, so dass sich in dieser Richtung die veränderte Steifigkeit besonders vorteilhaft auswirkt.

Es kann vorgesehen sein, dass der Verformungsabschnitt zumindest abschnittsweise plattenförmig ausgestaltet ist, wobei die Lastwirkungsrichtung der äußeren Kraft normal zur Plattenebene des Verformungsabschnitts gerichtet ist. Dadurch kann die Richtung, für die die Steifigkeit des Verformungsabschnitts reduziert ist, gezielt vorgegeben werden. Insbesondere kann diese Ausgestaltung mit einem plattenförmigen Griffteil kombiniert werden, so dass die Plattenebenen des Griffteils und des Verformungsteils parallel zueinander orientiert sind. Die Verformungseigenschaften des Interdentalreinigers beim Reinigen der Interdentalräume werden dadurch optimiert.

Weitere Vorteile und Merkmale der Erfindung ergeben sich aus den Ansprüchen und aus der nachfolgenden Beschreibung, in der Ausführungsbeispiele der Erfindung im Einzelnen unter Bezugnahme auf die Figuren erläutert sind. Dabei zeigen:

Fig. 1    einen erfindungsgemäßen Interdentalreiniger in einer schematischen Aufsicht;

Fig. 2    den Interdentalreiniger aus Fig. 1 in eingespanntem Zustand in einer Seitenansicht;

Fig. 3    den Interdentalreiniger aus Fig. 2 mit unterteiltem Kragabschnitt;

Fig. 4    eine vergrößerte Darstellung eines Teilbereichs aus Fig. 3;

Fig. 5    den Interdentalreiniger der Fig. 2 und 3 in ausgelenktem Zustand;

Fig. 6    den ausgelenkten Interdentalreiniger aus Fig. 5 und einen Interdentalreiniger aus dem Stand der Technik in ausgelenktem Zustand und

Fig. 7    eine vergrößerte Darstellung der Teilbereiche des Interdentalreinigers aus Fig. 6 zur Berechnung der Schnittwinkel.

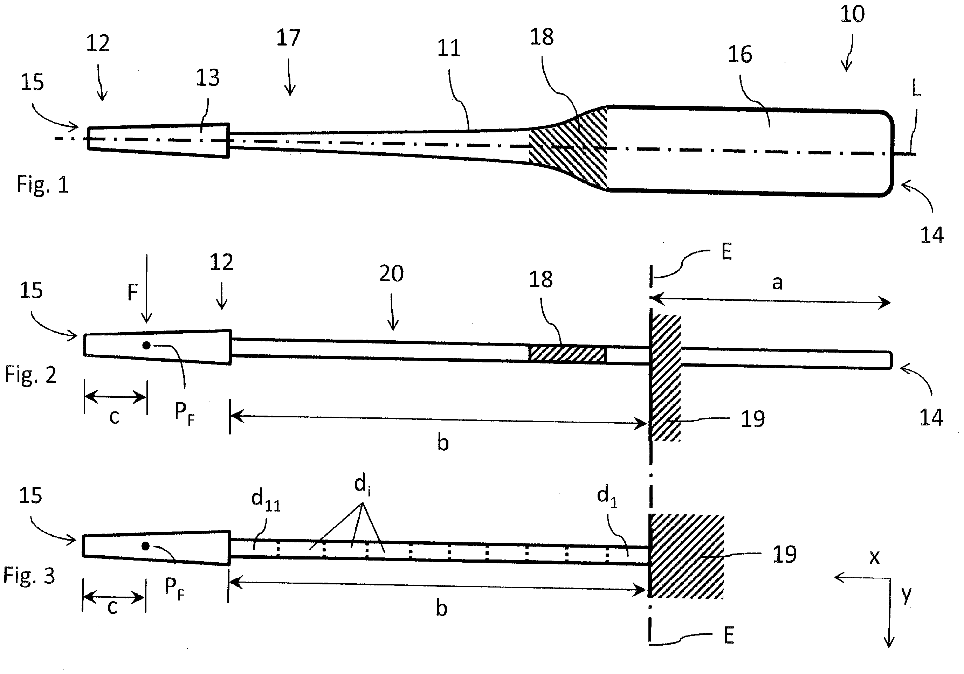

Fig. 1 zeigt einen erfindungsgemäßen Interdentalreiniger 10 mit einem stabförmigen Träger 11 aus einem ersten Kunststoff-Material in einer schematischen Aufsicht. Der Träger 11 erstreckt sich entlang einer in Fig. 1 gestrichelt dargestellten Längsachse L, die gemäß der Darstellung in Fig. 1 horizontal verläuft. In seinem vorderen, gemäß Fig. 1 linken Endabschnitt weist der Träger 11 ein Reinigungsteil 12 in Form eines Überzugs 13 aus einem weich-elastischen Kunststoff-Material auf. Üblicherweise ist eine Vielzahl radial abstehender Finger und/oder Borsten am Überzug 13 angeordnet, die aus Gründen der Übersichtlichkeit nicht dargestellt sind. Radiale Richtungen im Sinne der Erfindung stehen senkrecht zur Längsachse L des Trägers 11. Die Finger und/oder Borsten dienen zur Reinigung von Zahnzwischenräumen.

An einem dem Überzug 13 entgegengesetzten, hinteren Endabschnitt des Trägers 11 ist ein plattenförmiges Griffteil 16 angeordnet, wobei die Ebene der Platte parallel zur Zeichenebene weist. Der Benutzer greift das Griffteil 16 üblicherweise zwischen Daumen und Zeigefinger, wobei die plattenförmige Ausgestaltung eine einfache Handhabung ermöglicht und eine ungewollte Rotation des Interdentalreinigers 10 vermeidet.

Der Interdentalreiniger 10 ist in Längsrichtung begrenzt durch sein hinteres axiales Ende 14, das dem hinteren axialen Ende des Griffteils 16 entspricht, und durch sein vorderes axiales Ende 15, das dem vorderen axialen Ende des Überzugs 13 entspricht.

Zwischen dem Griffteil 16 und dem Überzug 13 besitzt der Träger 11 eine trapezförmige Ausgestaltung, die sich in Richtung des vorderen axialen Endes 15 verjüngt.

In einem dem Griffteil 16 zugewandten Abschnitt und außerhalb des Reinigungsteils 12 weist der Träger 11 einen Verformungsabschnitt 18 mit einer im Vergleich zu einem übrigen Verbindungsbereich 17 des Trägers 11 deutlich geringeren Steifigkeit auf, um das Biegeverhalten des Interdentalreinigers 10 gezielt zu beeinflussen. Im dargestellten Ausführungsbeispiel liegt der Verformungsabschnitt in dem trapezförmigen Bereich, in dem das Griffteil 16 in den Träger 11 übergeht. Im Gegensatz zum Verformungsabschnitt 18 ändert sich die Steifigkeit des übrigen Verbindungsbereichs 17 des Trägers 11 nur in geringem Maße aufgrund der sich zum Reinigungsteil 12 hin verjüngenden Ausgestaltung.

Im Ausführungsbeispiel der Fig. 1 wird die geringere Steifigkeit des Verformungsabschnitts 18 dadurch erreicht, dass der Verformungsabschnitt 18 aus einem anderen Material als der übrige Verbindungsbereich 17 des Trägers 11 besteht. Zusätzlich oder alternativ dazu ist der Querschnitt des Verformungsabschnitts 18 zum Reinigungsteil 12 hin verjüngt, was ebenfalls die Steifigkeit reduziert. Sowohl die Materialwahl als auch die Querschnittsverjüngung können im Sinne der Erfindung unabhängig voneinander oder auch in Kombination miteinander vorgesehen sein. Zusätzlich oder alternativ sind andere Möglichkeiten zur Beeinflussung möglich, etwa durch eine spezielle Gestaltung der Geometrie des Verformungsabschnitts 18.

Zur Beurteilung der Steifigkeit des Interdentalreinigers 10 und dessen Verformungsverhalten unter vorgegebener Belastung eignet sich der in Fig. 2 in einer Seitenansicht gezeigte Aufbau: Der Interdentalreiniger 10 ist mittels eines Spannmittels 19 fest eingespannt. Das Spannmittel 19 ist beispielsweise ein Spannelement mit zwei sich gegenüber liegenden Wangen, die zwischen sich den Interdentalreiniger 10 aufnehmen und innerhalb einer Einspannebene E einspannen. Die Einspannebene E steht senkrecht zur Längsachse L des Trägers 11 und schneidet den Interdentalreiniger 10 in einem Abstand a von 10 mm von seinem hinteren axialen Ende 14, wie es in Fig. 2 eingezeichnet ist.

Der vom Spannmittel 19 frei auskragende Teil des Interdentalreinigers 10 zwischen der Einspannebene E und dem Reinigungsteil 12 bildet einen Kragabschnitt 20 mit einer axialen Kragabschnittslänge b. Der Verformungsabschnitt 18 ist in Fig. 2 schraffiert eingezeichnet und ist Teil des Kragabschnitts 20. Das Reinigungsteil 12 ist nicht Teil des Kragabschnitts.

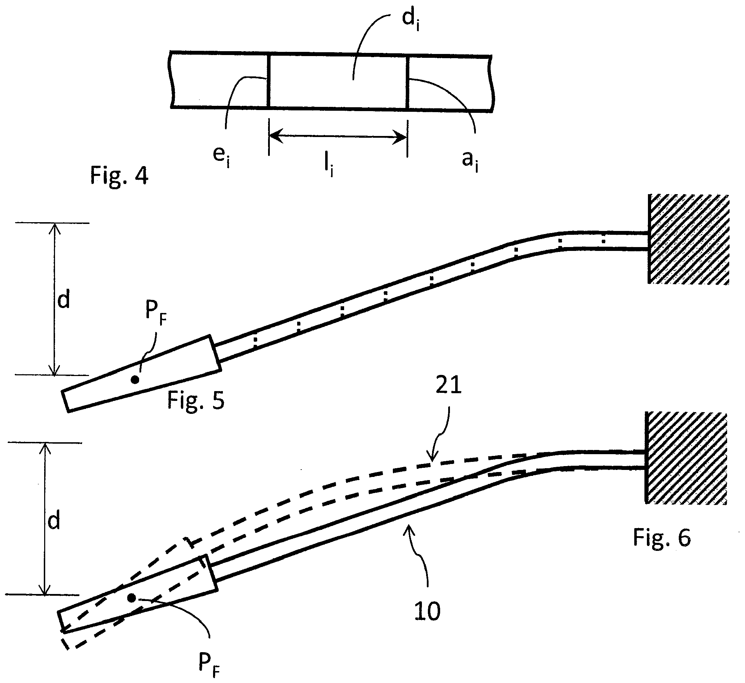

Der Kragabschnitt 20 des eingespannten Interdentalreinigers 10 wird gemäß Fig. 3 unterteilt in 11 Abschnitte $d_i$ mit der gleichen axialen Länge $l_i$, wobei der Index i als eine natürliche Zahl für den entsprechenden Abschnitt steht (Fig. 4). Abschnitt $d_i$ ist dabei stets der Abschnitt $d_1$, der der Einspannebene E am nächsten ist. Danach erfolgt die Nummerierung mit zunehmender Distanz zur Einspannebene E. Abschnitt $d_{11}$ ist folglich dem Reinigungsteil 12 am nächsten.

Jeder Abschnitt $d_i$ weist einen dem Griffteil 16 zugewandten Anfangspunkt $a_i$ und einen dem Reinigungsteil 12 zugewandten Endpunkt $e_i$ auf (Fig. 4). Bei zwei benachbarten Abschnitten $d_i$, $d_{i+1}$ entspricht der Endpunkt $e_i$ des axial hinteren Abschnitts $d_i$ dem Anfangspunkt $a_{i+1}$ dem axial vorderen Abschnitt $d_{i+1}$.

In einem Abstand c von 7 mm vom vorderen axialen Ende 15 des Interdentalreinigers 10 wirkt eine äußere Kraft F auf den Lastwirkungspunkt $P_F$ des Reinigungsteils 12 (Fig. 2 und 3) derart senkrecht zur Längsachse L des Trägers 11 nach unten, dass der Lastwirkungspunkt $P_F$ um eine Strecke d von 8 mm senkrecht zur Längsachse L des Trägers 11 elastisch ausgelenkt wird. Der Interdentalreiniger 10 nimmt unter dem Einfluss der äußeren Kraft F die in Fig. 5 gezeigte, gekrümmte Form an. Aus Fig. 5 geht hervor, dass der überwiegend große Anteil der Verformung des Interdentalreinigers 10 im Bereich des Verformungsabschnitts 18 erfolgt, während der übrige Verbindungsbereich 17 des Trägers 11 nur gering gekrümmt wird oder weitgehend geradlinig bleibt.

Für jeden Abschnitt $d_i$ werden seine jeweiligen Anfangspunkte $a_i$ und seine Endpunkte $e_i$ bestimmt. Die Punkte bestehen aus zugeordneten x- und y-Koordinaten, wobei die x-Achse mit der Längsachse L des Trägers 11 zusammenfällt und die y-Achse parallel zur Wirkungsrichtung der äußeren Kraft F gerichtet ist. Die Ermittlung der Koordinaten erfolgt beispielsweise mittels einer Kamera mit hinreichend großer Auflösung, die eine Bestimmung der Koordinaten in der Größenordnung von 100 $\mu$m, vorzugsweise 10 $\mu$m erlaubt.

Für jeden Abschnitt $d_i$ wird anschließend eine dem Abschnitt $d_i$ zugeordnete Abschnittsgerade $ag_i$ berechnet, die durch den Anfangspunkt $a_i$ und durch den Endpunkt $e_i$ des Abschnitts $d_i$ verläuft. Für jeden Abschnitt $d_i$ ist die Abschnittsgerade $ag_i$ eindeutig bestimmt durch

$$y_{ag;i} = ((y_{e;i} - y_{a;i}) / (x_{e;i} - x_{a;i})) x_{ag;i} + (y_{a;i} x_{e;i} - y_{e;i} x_{a;i}) / (x_{ei;} - x_{a;i})$$

wobei $x_{ag;1}$ und $y_{ag;1}$ die x- bzw. y-Koordinaten der Abschnittsgeraden $ag_i$ darstellen. Analog gilt dies auch für den Anfangspunkt $a_i(x_{a;1}/y_{a;1})$ und den Endpunkt $e_i(x_{e;i}/y_{e;i})$. Die Abschnittsgerade $ag_i$ verläuft dabei durch den Anfangspunkt $a_i$ und den Endpunkt $e_i$ des Abschnitts $d_i$.

Aus der alternativen Schreibweise der Abschnittsgeraden

$$y_{ag;1} = m_{ag;i} \; x_{ag;1} + y_{0;ag;i}$$

ist die Steigung $m_{ag;i}$ der Abschnittsgeraden $ag_i$ ersichtlich. Hierfür gilt:

$$m_{ag;i} = (y_{e;i} - y_{a;i}) / (x_{e;i} - x_{a;i})$$

Anschließend werden für zwei benachbarte Abschnitte $d_i$, $d_{i+1}$ und den entsprechenden Steigungen $m_{ag;i}$, $m_{ag;i+1}$ der jeweiligen Abschnittsgeraden $ag_i$, $ag_{i+1}$ der Schnittwinkel $\alpha$ berechnet zu

$$\alpha = \arctan(|(m_{ag;i} - m_{ag;i+1}) / (1 + (m_{ag;i} \cdot m_{ag;i+1}))|),$$

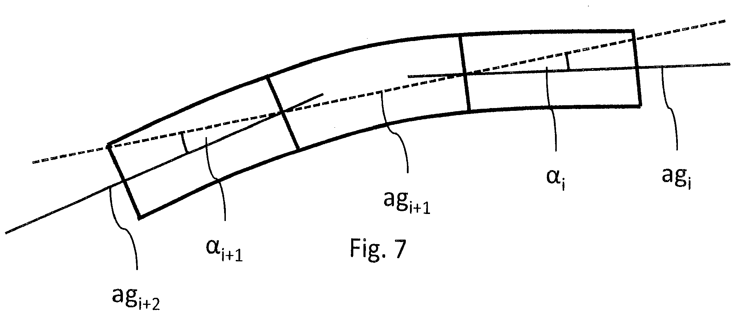

was auch aus Fig. 7 hervorgeht.

Der Schnittwinkel $\alpha$ charakterisiert das Krümmungsverhalten des Kragabschnitts 20 innerhalb eines Abschnitts $d_i$ und ist im Sinne der Erfindung positiv, wenn der Kragabschnitt 20 in Richtung der äußeren Kraft F gekrümmt ist. Das Schnittwinkel $\alpha$ ist negativ, wenn eine Krümmung entgegen der Richtung der äußeren Kraft F vorliegt. Der Schnittwinkel $\alpha$ ist gleich 0, wenn keine Krümmung im Abschnitt $d_i$ gegeben ist.

Aus Fig. 5 geht hervor, dass der zweite Bereich $d_2$ und der dritte Bereich $d_3$ eine wesentlich größere Krümmung ausweisen als die übrigen Bereiche. Folglich sind die zugeordneten Schnittwinkel $\alpha$ signifikant größer als der größte Schnittwinkel $\alpha$ der übrigen Abschnitte $d_i$, wobei dies im Sinne der Erfindung bedeutet, dass die zwei größten Schnittwinkel $\alpha$ um zumindest 50% größer sind als der größte Schnittwinkel $\alpha$ der übrigen Abschnitte $d_i$ bzw. der nächstgrößere Schnittwinkel.

In Fig. 6 ist der erfindungsgemäße Interdentalreiniger 10 in verformtem Zustand mit durchgezogenen Linien eingezeichnet. Zum Vergleich ist ein bekannter Interdentalreiniger 21 aus dem Stand der Technik in verformtem Zustand gestrichelt eingezeichnet. Im Gegensatz zu dem erfindungsgemäßen Interdentalreiniger 10 weist der bekannte Interdentalreiniger 21 ein durchgängiges Krümmungsverhalten auf, Bereiche mit annähernd linearem Verlauf fehlen gänzlich. Durch dieses Verformungsverhalten wird der gesamte Träger des bekannten Interdentalreinigers 21 gekrümmt, was seine Gebrauchseigenschaften beträchtlich verringert. Keiner der Schnittwinkel $\alpha$ des bekannten Interdentalreinigers 21 ist im beschriebenen Sinne um mindestens 50% größer als der größte Schnittwinkel $\alpha$ der übrigen Abschnitte $d_i$.

## Patentansprüche

1. Interdentalreiniger (10) mit einem stabförmigen Träger (11) aus einem Kunststoff-Material, der sich entlang einer Längsachse (L) erstreckt,

wobei der stabförmige Träger (11) in seinem vorderen Endabschnitt ein Reinigungsteil (12) in Form eines Überzugs (13) aus einem weich-elastischen Kunststoff-Material aufweist,
wobei in einem hinteren Endabschnitt des Trägers (11), das dem vorderen Endabschnitt axial entgegengesetzt ist, ein Griffteil (16) angeordnet ist,
wobei der Träger (11) außerhalb des Reinigungsteils (12) einen Verformungsabschnitt (18), der unter den folgenden Bedingungen eine signifikant größere Verformung zeigt:

- wenn der Interdentalreiniger (10) in einem Abstand (a) von 10 mm von seinem hinteren axialen Ende im Bereich des Griffteils (16) senkrecht zur Längsachse (L) des Trägers (11) mittels eines Spannmittels (19) in einer Einspannebene (E) fest eingespannt ist, und
- wenn ein eine Kragabschnittslänge (b) aufweisender Kragabschnitt (20) des Interdentalreinigers (10) von der Einspannebene (E) bis zum Reinigungsteil (12) in eine Vielzahl von Abschnitten ($d_i$) gleicher axialer Länge ($l_i$) unterteilt wird, wobei jeder Abschnitt ($d_i$) einen dem Griffteil (16) zugewandten Anfangspunkt ($a_i$) und einen dem Reinigungsteil (12) zugewandten Endpunkt ($e_i$) aufweist und
- wenn eine äußere Kraft (F) auf den Interdentalreiniger (10) in einem Abstand (c) von 7 mm von seinem vorderen axialen Ende derart einwirkt, dass der Interdentalreiniger (10) im Lastwirkungspunkt $P_F$ elastisch um eine Länge (d) von 8 mm senkrecht zur Längsachse (L) des Trägers (11) ausgelenkt ist, und
- wenn am verformten Interdentalreiniger (10) für jeden Anfangs- und Endpunkt ($a_i$,$e_i$) der Abschnitte ($d_i$) die x-Koordinate entlang der Längsachse (L) des Interdentalreinigers (10) und die y-Koordinate in Wirkungsrichtung der äußeren Kraft (F) bestimmt wird, und

- wenn für jeden Abschnitt ($d_i$) aus den x- und y-Koordinaten seines Anfangspunktes ($a_i$) und seines Endpunktes ($e_i$) eine Abschnittsgerade ($ag_i$) berechnet wird, die durch den Anfangspunkt ($a_i$) und durch den Endpunkt ($e_i$) verläuft, und
- wenn jeweils kleinere Schnittwinkel ($\alpha$) in Grad zwischen benachbarten Abschnittsgeraden ($ag_i$) berechnet werden,

dann sind die Schnittwinkel (a) von zwei oder drei Abschnittsgeraden ($ag_i$) um zumindest 50% größer als der größte Schnittwinkel ($\alpha$) aller übrigen Abschnittsgeraden ($ag_i$).

2. Interdentalreiniger nach Anspruch 1, **dadurch gekennzeichnet, dass** die Schnittwinkel ($\alpha$) von zwei oder drei Abschnittsgeraden ($ag_i$) um zumindest 80% größer sind als der größte Schnittwinkel ($\alpha$) aller übrigen Abschnittsgeraden ($ag_i$).

3. Interdentalreiniger nach Anspruch 1 oder 2, **dadurch gekennzeichnet, dass** die Schnittwinkel ($\alpha$) von zwei oder drei Abschnittsgeraden ($ag_i$) um zumindest 100% größer sind als der größte Schnittwinkel ($\alpha$) aller übrigen Abschnittsgeraden ($ag_i$).

4. Interdentalreiniger nach einem der Ansprüche 1 bis 3, **dadurch gekennzeichnet, dass** die Schnittwinkel ($\alpha$) von zwei oder drei Abschnittsgeraden ($ag_i$) um zumindest 200% größer sind als der größte Schnittwinkel ($\alpha$) aller übrigen Abschnittsgeraden ($ag_i$).

5. Interdentalreiniger nach einem der Ansprüche 1 bis 4, **dadurch gekennzeichnet, dass** der Kragabschnitt (20) des Interdentalreinigers (10) von der Einspannebene (E) bis zum Reinigungsteil (12) in zumindest zehn Abschnitte ($d_i$) gleicher axialer Länge ($l_i$) unterteilt wird.

6. Interdentalreiniger nach einem der Ansprüche 1 bis 5, **dadurch gekennzeichnet, dass** der Kragabschnitt (20) des Interdentalreinigers (10) von der Einspannebene (E) bis zum Reinigungsteil (12) in zumindest fünfzehn Abschnitte ($d_i$) gleicher axialer Länge ($l_i$) unterteilt wird.

7. Interdentalreiniger nach einem der Ansprüche 1 bis 6, **dadurch gekennzeichnet, dass** der Verformungsabschnitt (18) innerhalb des Kragabschnitts (20) die geringste Biegesteifigkeit besitzt, wobei die Biegesteifigkeit des Verformungsabschnitts (18) durch eine Querschnittsschwächung und/oder durch eine zumindest anteilige Verwendung eines Materials mit reduzierter Biegesteifigkeit und/oder durch die Geometrie des Verformungsabschnitts (18) erreicht wird.

8. Interdentalreiniger nach einem der Ansprüche 1 bis 7, **dadurch gekennzeichnet, dass** das Griffteil (16) zumindest abschnittsweise plattenförmig ausgebildet ist, wobei die Lastwirkungsrichtung der äußeren Kraft (F) normal zur Plattenebene des Griffteils (16) gerichtet ist.

9. Interdentalreiniger nach einem der Ansprüche 1 bis 8, **dadurch gekennzeichnet, dass** der Verformungsabschnitt (18) zumindest abschnittsweise plattenförmig ausgestaltet ist, wobei die Lastwirkungsrichtung der äußeren Kraft (F) normal zur Plattenebene des Verformungsabschnitts (18) gerichtet ist.

## Claims

1. An interdental cleaner (10) with a rod-shaped carrier (11) made of a plastics material, which extends along a longitudinal axis (L),

wherein the rod-shaped carrier (11) has a cleaning part (12) in its front end section in the form of a cover (13) made of a soft elastic plastics material,
wherein a handle part (16) is arranged in a rear end section of the carrier (11) which is axially opposite the front end section,
wherein the carrier (11) has, outside the cleaning part (12) a deformation section (18) that exhibits significantly greater deformation under the following conditions:

- if the interdental cleaner (10) is firmly clamped in a clamping plane (E) by means of a clamping device (19) at a distance (a) of 10 mm from its rear axial end in the region of the handle part (16) perpendicular to the longitudinal axis (L) of the carrier (11), and

- if a cantilever section (20) of the interdental cleaner (10) having a cantilever section length (b) is subdivided from the clamping plane (E) to the cleaning part (12) into a plurality of sections ($d_i$) of equal axial length ($l_i$), each section ($d_i$) having a start point ($a_i$) facing the handle part (16) and an end point ($e_i$) facing the cleaning part (12), and

- if an external force (F) acts on the interdental cleaner (10) at a distance (c) of 7 mm from its front axial end in such a way that the interdental cleaner (10) is elastically deflected in the load action point $P_F$ by a length (d) of 8 mm perpendicular to the longitudinal axis (L) of the carrier (11), and

- if the x-coordinate along the longitudinal axis (L) of the interdental cleaner (10) and the y-coordinate in the direction of action of the external force (F) are determined on the deformed interdental cleaner (10) for each start point and end point ($a_i, e_i$) of the sections ($d_i$), and

- if a straight section line ($ag_i$) which runs through the start point ($a_i$) and through the end point ($e_i$) is calculated for each section ($d_i$) from the x- and y-coordinates of its start point ($a_i$) and its end point ($e_i$), and

- if respective smaller intersection angles ($\alpha$) are calculated in degrees between adjacent straight section lines ($ag_i$),

then the intersection angles ($\alpha$) of two or three straight section lines ($ag_i$) are at least 50% greater than the greatest intersection angle ($\alpha$) of all the other straight line sections ($ag_i$).

2. The interdental cleaner according to claim 1, **characterized in that** the intersection angles ($\alpha$) of two or three straight section lines ($ag_i$) are at least 80% greater than the greatest intersection angle ($\alpha$) of all the other straight section lines ($ag_i$).

3. The interdental cleaner according to claim 1 or 2, **characterized in that** the intersection angles ($\alpha$) of two or three straight section lines ($ag_i$) are at least 100% greater than the greatest intersection angle ($\alpha$) of all the other straight section lines ($ag_i$).

4. The interdental cleaner according to any of claims 1 to 3, **characterized in that** the intersection angles ($\alpha$) of two or three straight section lines ($ag_i$) are at least 200% greater than the greatest intersection angle ($\alpha$) of all the other straight section lines ($ag_i$) .

5. The interdental cleaner according to any of claims 1 to 4, **characterized in that** the cantilever section (20) of the interdental cleaner (10) is subdivided from the clamping plane (E) to the cleaning part (12) into at least ten sections ($d_i$) of the same axial length ($l_i$) .

6. The interdental cleaner according to any of claims 1 to 5, **characterized in that** the cantilever section (20) of the interdental cleaner (10) is subdivided from the clamping plane (E) to the cleaning part (12) into at least fifteen sections ($d_i$) of the same axial length ($l_i$).

7. The interdental cleaner according to any of claims 1 to 6, **characterized in that** the deformation section (18) within the cantilever section (20) has the lowest flexural rigidity, the flexural rigidity of the deformation section (18) being achieved by a cross-sectional weakening and/or by an at least partial use of a material with reduced flexural rigidity and/or by the geometry of the deformation section (18).

8. The interdental cleaner according to any of claims 1 to 7, **characterized in that** the handle part (16) is at least partially plate-shaped, the load action direction of the external force (F) being in a direction normal to the plate plane of the handle part (16) .

9. The interdental cleaner according to any of claims 1 to 8, **characterized in that** the deformation section (18) is at least partially plate-shaped, the load action direction of the external force (F) being in a direction normal to the plate plane of the deformation section (18).

**Revendications**

1. Nettoyant interdentaire (10) comportant un support en forme de tige (11) en matière plastique qui s'étend le long d'un axe longitudinal (L),

dans lequel le support (11) en forme de tige présente une partie de nettoyage (12) sous la forme d'un revêtement (13) en matière plastique souple et élastique dans sa région d'extrémité avant,
dans lequel une partie de préhension (16) est disposée dans une région d'extrémité arrière du support (11), laquelle est axialement opposée à la région d'extrémité avant, dans lequel le support (11) présente une région de déformation (18) à l'extérieur de la partie de nettoyage (12), laquelle région de déformation comprend une déformation significativement plus grande dans les conditions suivantes :

- si le nettoyeur interdentaire (10) est fermement serré dans un plan de serrage (E) au moyen d'un moyen de serrage (19) à une distance (a) de 10 mm de son extrémité axiale arrière dans la zone de la partie de préhension (16) de manière perpendiculaire à l'axe longitudinal (L) du support (11), et
- si une région de col (20) du nettoyeur interdentaire (10) présentant une longueur de région de col (b) est divisée en une pluralité de régions ($d_i$) de même longueur axiale ($l_i$) du plan de serrage (E) à la partie de nettoyage (12), chaque région ($d_i$) présentant un point de début ($a_i$) faisant face à la partie de préhension (16) et un point de fin ($e_i$) faisant face à la partie de nettoyage (12) et
- si une force externe (F) agit sur le nettoyeur interdentaire (10) à une distance (c) de 7 mm de son extrémité axiale avant de telle manière que le nettoyeur interdentaire (10) est dévié élastiquement d'une longueur (d) de 8 mm au point d'action de charge $P_F$, perpendiculairement à l'axe longitudinal (L) du support (11), et
- si la coordonnée x est déterminée le long de l'axe longitudinal (L) du nettoyeur interdentaire (10) et la coordonnée y est déterminée dans la direction d'action de la force extérieure (F), sur le nettoyeur interdentaire (10) déformé pour chaque point de début et de fin ($a_i$, $e_i$) des régions ($d_i$), et
- si pour chaque région ($d_i$), une droite de région ($ag_i$) est calculée à partir des coordonnées x et y de son point de début ($a_i$) et de son point de fin ($e_i$), ladite droite de région passant par le point de début ($a_i$) et par le point de fin ($e_i$), et
- si des angles de coupe ($\alpha$) respectivement plus petits sont calculés en degrés entre des droites de région ($ag_i$) adjacentes,

alors les angles de coupe ($\alpha$) de deux ou trois droites de région ($ag_i$) sont au moins 50 % plus grands que le plus grand angle de coupe ($\alpha$) de toutes les droites de région ($ag_i$) restantes.

2. Nettoyeur interdentaire selon la revendication 1, **caractérisé en ce que** l'angle de coupe ($\alpha$) de deux ou trois droites de région ($ag_i$) est au moins 80 % plus grand que le plus grand angle de coupe ($\alpha$) de toutes les droites de région ($ag_i$) restantes.

3. Nettoyeur interdentaire selon la revendication 1 ou 2, **caractérisé en ce que** les angles de coupe ($\alpha$) de deux ou trois droites de région ($ag_i$) sont au moins 100 % plus grands que le plus grand angle de coupe ($\alpha$) de toutes les droites de région ($ag_i$) restantes.

4. Nettoyeur interdentaire selon l'une des revendications 1 à 3, **caractérisé en ce que** les angles de coupe ($\alpha$) de deux ou trois droites de région ($ag_i$) sont au moins 200 % plus grands que le plus grand angle de coupe ($\alpha$) de toutes les droites de région ($ag_i$) restantes.

5. Nettoyeur interdentaire selon l'une des revendications 1 à 4, **caractérisé en ce que** la région de col (20) du nettoyeur interdentaire (10) est divisée en au moins dix régions ($d_i$) de même longueur axiale ($l_i$) du plan de serrage (E) à la partie de nettoyage (12).

6. Nettoyeur interdentaire selon l'une des revendications 1 à 5, **caractérisé en ce que** la région de col (20) du nettoyeur interdentaire (10) est divisée en au moins quinze régions ($d_i$) de même longueur axiale ($l_i$) du plan de serrage (E) à la partie de nettoyage (12).

7. Nettoyant interdentaire selon l'une des revendications 1 à 6, **caractérisé en ce que** la région de déformation (18) possède la rigidité en flexion la plus faible à l'intérieur de la région de col (20), la rigidité en flexion de la région de déformation (18) étant obtenue par un affaiblissement de section transversale et/ou par l'utilisation au moins partielle d'un matériau comportant une rigidité en flexion réduite et/ou par la géométrie de la région de déformation (18).

8. Nettoyeur interdentaire selon l'une des revendications 1 à 7, **caractérisé en ce que** la partie de préhension (16) est conçue en forme de plaque au moins dans certaines régions, la direction d'action de charge de la force externe (F) étant dirigée perpendiculairement au plan de plaque de la partie de préhension (16).

9. Nettoyeur interdentaire selon l'une des revendications 1 à 8, **caractérisé en ce que** la région de déformation (18) est conçue en forme de plaque au moins dans certaines régions, la direction d'action de charge de la force externe (F) étant dirigée perpendiculairement au plan de plaque de la région de déformation (18).

Fig. 1

Fig. 2

Fig. 3

EP 3 764 943 B1

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0932371 B1
- DE 102012015664 A1
- DE 102013010782 A1
- DE 102016005012 A1
- EP 3245977 A1
- WO 2017104784 A1